# EUROPÄISCHE PATENTSCHRIFT

(11) **EP 4 484 515 B1**
(45) Veröffentlichungstag und Bekanntmachung des Hinweises auf die Patenterteilung: **03.09.2025**
(21) Anmeldenummer: 23181750.3
(22) Anmeldetag: 27.06.2023
(51) Int. Cl.: C09J 103/02, C09J 183/04

(54) **ZUCKERHALTIGES BINDEMITTELZUSAMMENSETZUNG FÜR HOLZWERKSTOFFPLATTEN, INSBESONDERE HOLZSPANPLATTEN, ALS EINKOMPONENTENSYSTEM**
SUGAR-CONTAINING BINDER COMPOSITION FOR WOOD-BASED BOARDS, IN PARTICULAR CHIP BOARDS, AS A ONE-COMPONENT SYSTEM
COMPOSITION DE LIANT CONTENANT DU SUCRE POUR PANNEAUX EN BOIS, EN PARTICULIER PANNEAUX EN COPEAUX DE BOIS, COMME SYSTÈME À UN SEUL COMPOSANT

(43) Veröffentlichungstag der Anmeldung: 01.01.2025
(73) Patentinhaber: SWISS KRONO Tec AG, 6004 Luzern (CH)
(72) Erfinder: Gier, Andreas, 66399 Mandelbachtal (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- CN-A- 106 398 614
- KR-A- 20220 166 937

## Beschreibung

Die vorliegende Erfindung betrifft ein zuckerhaltiges Bindemittelsystem für Holzwerkstoffplatten, und eine Holzwerkstoffplatte enthaltend dieses zuckerhaltige Bindemittelsystem.

Klebstoffe bzw. Bindemittel sind ein entscheidender Bestandteil bei der industriellen Fertigung von einer Vielzahl von Produkten, u.a. bei der Herstellung von Holzwerkstoffplatten. Hierbei werden Holzzerkleinerungsprodukte mit dem Bindemittel beleimt und unter Druck- und Temperaturanwendung zu Formkörpern wie z.B. Platten verpresst. Die Art und Menge des verwendeten Bindemittels wird dabei wesentlich von der Größe und Qualität der verwendeten Holzfasern und/oder Holzspäne beeinflusst.

Holzwerkstoffe (HWS ) werden seit Jahrzehnten mit Bindemitteln auf Basis von Duroplasten hergestellt. Von diesen Duroplasten sind mengenmäßig die Harnstoff-Formaldehyd-Leime die Wichtigsten. Weitere ebenfalls eingesetzte Leime in Holzwerkstoffen sind Melamin-Harnstoff-Formaldehyd- und Phenol-Formaldehyd-Leime. Diese Bindemittel enthalten im Wesentlichen zwei Komponenten. Die eine Komponente ist Formaldehyd, die andere Komponente ist eine Chemikalie auf Erdölbasis (z.B. Phenol), oder aus der Ammoniakchemie (z.B. Melamin oder Harnstoff). In den letzten Jahren wurde allerdings durch toxikologische Studien festgestellt, dass Formaldehyd als krebserregend einzustufen ist. Davon sind natürlich auch Produkte wie Holzwerkstoffe betroffen, die durch die Verwendung des oben genannten Leims in der Nutzung in geringen Mengen Formaldehyd emittieren.

Weiter existieren auch noch Leime auf Basis von Isocyanaten (PMDI = polymeres Diphenylmethandiisocyanat). All diese Leime werden aus petrochemischen Vorstufen hergestellt.

Durch die Entwicklung auf EU-Ebene zeichnet sich ab, dass neben den Vorgaben hinsichtlich der Kreislaufwirtschaft auch ein verstärktes Augenmerk auf den Einsatz von nachwachsenden Rohstoffen für die Herstellung von Produkten liegt. Damit haben die oben genannten Leime und damit die daraus hergestellten HWS Probleme. Zum einen ist ein Recycling von HWS die mit duroplastischen Bindemitteln hergestellt sind schwierig, da die verwendeten Leime zum Teil eine hohe Hydrolyseresistenz besitzen und natürlich der Einsatz von petrochemischen Vorstufen vermieden werden sollte.

Zudem verschärfen sich aktuell die Anforderungen an die Emission von Inhaltsstoffen, insbesondere Formaldehyd, was den Einsatz von HWS mit formaldehydhaltigen Leimen nicht unbedingt fördert.

Eine mögliche Lösung ist, Leime auf Basis von nachwachsenden Rohstoffen einzusetzen. Als mögliche Vorstufen dienen dabei Mono- oder Disaccharide, Stärke, Proteine, Lignin um nur einige zu nennen

So basiert die in der EP 2930195 A1 beschriebene Bindemittelzusammensetzung auf einem Mono- und/oder Disaccharid, einem Amid und einem Aldehyd, insbesondere Formaldehyd. Der Anteil an Formaldehyd konnte zwar reduziert werden, aber ein vollständiger Verzicht auf Formaldehyd ist mit diesem System nicht möglich.

EP3511353 A1 offenbart eine Bindemittelzusammensetzung aus einem Mono- und/oder Disaccharid, einem Amid und einem Dialdehyd, wobei zunächst ein stabiles Vorprodukt aus dem Saccharid und Harnstoff als Amid hergestellt wird. Zu diesem Vorprodukt wird kurz vor dem Einsatz als Bindemittel das Dialdehyd zugegeben.

EP 3995538 A1 und EP 4129597 A1 beschreiben Zwei-Komponenten-Bindemittelsysteme für Holzwerkstoffplatten basierend auf Zucker oder Zuckeralkoholen und Isocyanat und ggfs. Polyvinylalkohol.

In der EP 2576661 A1 wird ein zweikomponentiges System aus einem Pflanzenmehl und einem polyisocyanat-basierten Präpolymer oder Latex beschrieben. Ein weiteres System auf Basis von Lignin, Alkali und Epichlorhydrin wird in der WO 2022003614 offengelegt. Dieses System wird zur Herstellung von Sperrholz genutzt.

In den beschriebenen Systemen wird jeweils ein Härter bzw. Vernetzer beschrieben, der die Systeme erst technisch einsetzbar macht. Die Härter bzw. Vernetzer sind meist auf Basis von "Erdölchemikalien", sodass der Ansatz ein Bindemittelsystem nur auf Basis nachwachsender Rohstoff zu entwickeln, nicht erfüllt wird. Zudem müssen die Härter bzw. Vernetzer teilweise in erheblichen Mengen zugegeben werden. Ein weiterer Aspekt ist, dass diese Bindemittel nicht für die Herstellung der verschiedenen Holzwerkstoff geeignet sind, sondern nur für einen oder einige wenige HWS. Ein Bindemittelsystem sollte aber die Herstellung "aller" Holzwerkstoff ermöglichen.

Im Rahmen dieser Änderungen im Markt durch gesetzliche Vorgaben taucht natürlich immer die Frage auf, ob durch die Verwendung von nachwachsenden Rohstoffen, nicht Lebensmittelengpässe auftreten können. Auch muss die Frage beantwortet werden, ob die Vorstufen für die Herstellung von Leimen ganzjährig in ausreichenden Mengen zur Verfügung stehen.

Zudem können mögliche Leime auf Basis nachwachsender Rohstoffe eine Herausforderung für die existierende Pressenlinien darstellen, insbesondere für die Dosierung, da sie zum Teil nur in Form von Pulvern appliziert werden können. Dies trifft für die aktuell eingesetzten Leime nicht zu. Ein weiterer Aspekt ist, dass die Leime auf Basis nachwachsender Rohstoffe nicht die technologischen Werte erreichen, die für die verschiedenen Produkte benötigt werden.

CN 106 398 614 A offenbart ein Verfahren zur Herstellung eines Sprühklebers zur Auftragung auf die Oberfläche eines Holzhandwerkartikels. Die Kleberzusammensetzung basiert auf einem Epoxyharz und einem MQ-Silikonharz. Diese Offenbarung besteht aus mehreren Listen natürlicher Materialien, worunter Zucker namentlich aufgeführt wird.

Der vorliegenden Erfindung liegt die Aufgabe zugrunde, ein Bindemittelsystem zu entwickeln, der die oben beschriebenen Probleme nicht besitzt, d. h. dass es in ausreichender Menge verfügbar ist, als Flüssigleim verfügbar ist, auf den vorhandenen Anlagen verarbeitbar ist und ähnliche technologische Werte erreicht wie die klassischen Leime. Zudem sollte die Herstellung des Leims auf Basis eines nicht für die Ernährung relevanten Rohstoffs erfolgen. Der Leim sollte nicht toxisch sein und die Formulierung keine organischen Lösemittel enthalten. Auch sollte die Herstellung des Leims möglichst ohne großen Energieaufwand möglich sein. Er sollte auch in einem Konzentrationsbereich herstellbar sein, in dem die heute eingesetzten Harnstoff-Formaldehyd-Leime auch liegen (50 - 60 Gew% ).

Diese Aufgabe wird erfindungsgemäß durch ein Bindemittelsystem mit den Merkmalen des Anspruchs 1, eine Holzwerkstoffplatte mit den Merkmalen des Anspruchs 15 gelöst.

Demnach wird ein Bindemittelsystem für Holzwerkstoffplatten bereitgestellt, welches als Einkomponentensystem vorliegt und einsetzbar ist. Diese Bindemittelsystem umfasst:
a) Mindestens einen Zucker,; und
b) Mindestens ein Additiv aus
   - mindestens einer Verbindung der allgemeinen Formel (I)

      **R¹ₐSiX¹₍₄₋ₐ₎** **(I),**

      wobei
   - X¹ Alkoxy-, Aryloxy-, Acyloxy- ist, und
   - R¹ ein organischer Rest ist ausgewählt aus der Gruppe umfassend Alkyl, Aryl, Cycloalkyl, die durch -O- oder -NH- unterbrochen sein können, und
   - wobei R¹ mindestens eine funktionelle Gruppe Q₁ aufweist, die ausgewählt ist aus einer Gruppe enthaltend eine Acryl-, Acryloxy-, Amino-, Aminoalkylamino-, Methacryl-, Methacryloxy-, Cyano-, Isocyano-, Epoxid- und Alkenyl-Gruppe, und
   - a = 0, 1, 2, 3, insbesondere 0 oder 1 ist,
   - mindestens einer Verbindung der allgemeinen Formel (II)

      **R²_{b}SiX²_{(4-b)}** **(II),**

      wobei
   - X² Alkoxy-, Aryloxy-, Acyloxy ist,
   - R² ein nicht-hydrolysierbarer organischer Rest R² ist ausgewählt aus der Gruppe umfassend Alkyl und Aryl, und
      a) - b = 1, 2, 3, oder 4, bevorzugt 1 oder 2, ist

Entsprechend wird ein Bindemittelsystem zur Verfügung gestellt, welches im Wesentlichen aus einem Reaktionsprodukt aus Zucker und Silan besteht. Die Komponente Zucker steht weltweit in großen Mengen zur ganzjährig zur Verfügung und wird bereits jetzt für eine Vielzahl von industriellen Anwendungen genutzt. Für diese Anwendung muss kein Zucker, der für die Herstellung von Lebensmitteln oder den direkten Verzehr geeignet ist, verwendet werden. Es können durchaus auch Rohzucker eingesetzt werden. Wegen der großen, verfügbaren Mengen ist auch gewährleistet, dass keine Konkurrenz zu Lebensmittel-Anwendungen besteht.

Das in der vorliegenden Zusammensetzung verwendete Additiv umfasst mit der Verbindung der allgemeinen Formel (I) eine vernetzende Komponente und mit der Verbindung der allgemeinen Formel (II) eine hydrophobe Komponente. Die vernetzende, hydrophile Komponente der Formel (I) ermöglicht zum einen, insbesondere über die (vorhandenen oder sich mittels Hydrolyse von z.B. Alkoxy-Gruppen bildenden) freien -OH Gruppen und funktionellen Gruppen, eine Anbindung der Verbindung an die Holzpartikel und die Zuckerkomponenten und zum anderen die Ausbildung von Quervernetzungen. Die hydrophobe Komponente der Formel (II) - gebildet z.B. aus den Alkylgruppen des Restes R² - bildet eine wasserabweisende Barriere auf.

Die vorliegende Bindemittelzusammensetzung kann nicht nur für Flächenverklebungen, sondern auch zur Verklebung von Holzpartikeln, wie Spänen, Strands oder Fasern eingesetzt werden. Entsprechend wird die vorliegende Bindemittelzusammensetzung bevorzugt als Bindemittel für lignocellulosehaltige Platten, insbesondere für Holzfaserplatten, Holzspanplatten, Gipsfaserplatten oder auch Zementfaserplatten verwendet. Auch ist die Verwendung der vorliegenden Bindemittelzusammensetzung als Klebstoff für die Sperrholz-, Brettschichtholz- oder Furnierschichtholz-Fertigung (laminated veneer lumber, LVL) möglich.

Zur Einstellung der Viskosität können bei Bedarf Andicker eingesetzt werden. Dies können verschiedene Mehle (Weizen- oder Roggenmehl, Guarkern-, Johannisbrotkernmehl usw.) sein.

Besonders vorteilhaft ist, dass es sich bei dem Leim um ein Einkomponentensystem handelt. Damit werden bei Anlagenstillständen Voraushärtungen des Leims vermieden. Auch gestaltet sich das Reinigen der Produktionslinien deutlich günstiger, da keine ausgehärteten Leimreste aus Anlagenteilen (z. B. Mischer usw.) entfernt werden müssen. Auch ist ein Einkomponentensystem in der Handhabung deutlich einfacher als ein Mehrkomponentensystem, bei dem die Einzelkomponenten gemischt werden müssen.

Das vorliegende wässrige Bindemittelsystem weist bevorzugt außer dem Zucker, Zuckeralkohol und dem Silan und ggfs. einem Andicker und Lösemittel keine weiteren Komponenten auf.

So ist es frei von Aldehyden, insbesondere frei von Formaldehyd, Isocyanaten, synthetischen Polymeren, wie Epoxy-, Latex- oder Polyisocanat-basierten Polymere, synthetischen Polyolen, mineralischen oder natürlichen Ölen, Härter (z.B. Alkanolaminsalze von Säuren), Netzmittel (Tenside oder Mischungen davon), Entschäumer, Trennmittel und/oder weitere synthetische Komponenten.

Das vorliegende Bindemittelsystem weist somit eine Vielzahl von Vorteilen gegenüber den bekannten Bindemitteln auf: Rohstoff ist in beliebiger Menge verfügbar, keine Formaldehydemission, keine aufwändige Prozessanpassung, keine Toxizität der Zusatzkomponente, Einkomponentensystem.

Aus den oben geschilderten Gründen zur Bedeutung und Vorteil der Verwendung von nachwachsenden Rohstoffen werden Polyole auf Basis von Zuckern bevorzugt. Diese lassen sich leicht durch Hydrierung bzw. durch enzymatische Umwandlung der entsprechenden Vorprodukte erzeugen.

In einer Ausführungsform des vorliegenden Bindemittelsystems werden als Zucker Mono- und/oder Disaccharide verwendet. Mono- und Disaccharide können in ihrer reduzierenden oder nicht-reduzierenden Form verwendet werden.

Unter reduzierenden Mono- oder Disacchariden sind solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine α,β-1,2- Glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform wird das Disaccharid Saccharose z.B in Form von Rohrzucker oder Kristallzucker verwendet.

In einer anderen Ausführungsform können als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Monsaccharide können sowohl in ihrer D- als auch in ihrer L-Form verwendet werden. Besonders bevorzugt ist die Verwendung von Glucose,

Es ist auch generell vorstellbar als Zuckeralkohole ausgewählt aus einer Gruppe enthaltend vierwertige, fünfwertige, sechswertige Alkohole (auch bekannt als reduzierte Zucker bzw. Alditole) zu verwenden. Dabei können als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden. Als besonders vorteilhaft hat sich die Verwendung von Sorbit (bzw. Sorbitol) erwiesen.

Als Polyole oder polyalkoholische Verbindungen werden demnach ausschließlich mehrwertige Alkohole auf Zuckerbasis verwendet. Auf die Verwendung von synthetischen Polyolen wie Glykole, wie Ethylenglykol, Propylenglykol, Diethylenglykol, Triethylenglykol, Polyethylenglykol, Polypropylenglykol, Polybutylenglykol wird demnach verzichtet.

Wie angeführt, umfasst das vorliegende Bindemittelsystem neben der Zuckerkomponente mindestens ein Additiv auf der Basis von Silanverbindungen der allgemeinen Formel (I) und (II).

In einer Ausführungsform umfasst das Additiv mindestens zwei, bevorzugt mindestens drei Silan-Verbindungen der allgemeinen Formel (I) und mindestens eine Verbindung der allgemeinen Formel (II).

Der Rest X¹ ist vorteilhafterweise ausgewählt aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, und der Rest X² ist vorteilhafterwiese ausgewählt ist aus einer Gruppe enthaltend, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,

Der organische Rest R¹ ist bevorzugt ausgewählt aus einer Gruppe umfassend C₁-C₃₀-Alkyl, insbesondere C₁-C₂₅-Alky, insbesondere bevorzugt C₁-C₁₀ Alkyl und C₃-C₈-Cycloalkyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, bevorzugt Methyl, Ethyl, Propyl.

In einer Ausführungsform der vorliegenden Bindemittelzusammensetzung ist die mindestens eine funktionelle Gruppe Q¹ ausgewählt aus einer Gruppe enthaltend Amino-, Aminoalkylamino-, Methacryl-, Methacryloxy-, Epoxid- und Alkenyl-Gruppe, bevorzugt Amino-, Aminoalkylamino-, Epoxid- und Alkenyl-Gruppe, insbesondere bevorzugt Amino-, Aminoalkylamino- (z.B. Aminoethylamino) und Alkenyl-Gruppe. Unter einer Alkenyl-Gruppe ist vorliegend eine Gruppe mit einer Doppelbindung zu verstehen. Die funktionelle Gruppe Q¹ kann demnach vorteilhafterweise einen Rest mit einer Doppelbindung oder einer EpoxidGruppe auf, der mittels UV-Strahlung aktivierbar und polymerisierbar ist.

In einer bevorzugten Ausführungsform der vorliegenden Bindemittelzusammensetzung entspricht mindestens eine Verbindung der allgemeinen Formel (I) der Formel **R¹SiX¹₃** mit R¹ mit C1-C10 Alkyl mit einer funktionellen Gruppe Q¹ ausgewählt aus Amino-, Aminoalkylamino-(z.B. Aminoethylamino), Methacryloxy -, Epoxid- und Alkenyl-Gruppe und mit X¹ Alkoxy, insbesondere Methoxy, Ethoxy, n-Propoxy oder i-Propoxy.

In einer Variante kann R1 Methyl, Ethyl oder Propyl substituiert mit einer funktionellen Gruppe Q1, insbesondere substituiert mit einer Amino-, Aminoalkylamino- oder Alkenyl-Gruppe sein.

In einer Variante liegt die Alkenyl-Gruppe als Vinyl-Gruppe vor. In diesem Fall ist die Vinylgruppe direkt mit dem Si-Atom verbunden, so dass auf R1 als Alkylgruppe bevorzugt verzichtet werden kann.

In einer Variante der vorliegenden Zusammensetzung können Verbindungen der allgemeinen Formel (I) gemäß R¹SiX¹₃, mit einer funktionellen Gruppe Q¹ ausgewählt sein aus Methacryloxypropyltrimethoxysilan (MPTS), Silane mit einer Epoxyfunktionalisierung wie Glycidyl-oxypropyltriethoxysilan, oder Silane mit einer Aminofunktionalisierung wie 2-Aminoethyl-3-aminopropyltriethoxysilan oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen

Der Begriff "substituiert" bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, wie Pyrrolidinyl, Imidazolyl, Indolyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer weiteren Variante der vorliegenden Bindemittelzusammensetzung entspricht die Verbindung der allgemeinen Formel (I) der Formel **SiX¹₄**, wobei der Rest X¹ Alkoxy, insbesondere Methoxy, Ethoxy, n-Propoxy oder i-Propoxy, ist. Als besonders bevorzugte Vernetzer werden Tetramethoxysilan und Tetraethoxysilan verwendet.

In einer weiteren Ausführungsform der vorliegenden Zusammensetzung ist der nichthydrolisierbare organische Rest R² der Verbindung gemäß der Formel (II) ausgewählt aus einer Gruppe umfassend C₁-C₁₅-Alkyl, insbesondere C₁-C₁₀-Alkyl, und C₆-C₁₀-Aryl. Diese können nicht-substituiert oder mit einer weiteren hydrophoben Gruppe substituiert sein

Es ist bevorzugt, wenn der nicht-hydroliserbare organische Rest R² ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Phenyl und Naphthyl. Besonders bevorzugt sind Methyl, Ethyl, Propyl, Octyl, oder Phenyl-Reste.

Unter dem Begriff "nichthydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt

Die Verbindung der Formel (II) kann insbesondere umfassen: **R²SiX²₃** mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Methyltriethoxysilan, Octyltriethoxysilan, Phenyltriethoxysilan.

In einer Variante der vorliegenden Zusammensetzung werden als Additiv jeweils eine Verbindung der allgemeinen Formel (I) und eine Verbindung der allgemeinen Formel (II) verwendet.

Wie bereits angeführt, können in einer weiteren Variante der vorliegenden Bindemittelzusammensetzung aber auch mindestens zwei, bevorzugt mindestens drei Verbindungen der allgemeinen Formel (I) und mindestens eine Verbindung der allgemeinen Formel (I) im Additiv enthalten sein. Jegliche Kombination ist hier vorstellbar.

So kann das in der vorliegenden Bindemittelzusammensetzung verwendete Additiv folgende Kombinationen aufweisen:
- mindestens ein **SiX¹₄**, wobei der Rest X¹ Alkoxy, insbesondere Methoxy, Ethoxy, n-Propoxy oder i-Propoxy, ist, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, oder
- mindestens ein **SiX¹₄**, wobei der Rest X¹ Alkoxy, insbesondere Methoxy, Ethoxy, n-Propoxy oder i-Propoxy, ist, mindestens ein **R¹SiX¹₃** mit R¹ mit C1-C8 Alkyl mit einer funktionellen Gruppe Q¹ ausgewählt aus Amino-, Aminoalkylamino-, Epoxid- und Alkenyl-Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, oder
- mindestens ein **SiX¹₄**, wobei der Rest X¹ Alkoxy, insbesondere Methoxy, Ethoxy, n-Propoxy oder i-Propoxy, ist, und mindestens zwei (verschiedene) **R¹SiX¹₃** mit R¹ mit C1-C8 Alkyl mit einer funktionellen Gruppe Q¹ ausgewählt aus Amino-, Aminoalkylamino-, Epoxid- und Alkenyl-Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy.

In besonders bevorzugten Ausführungsformen enthält das Additiv:
- Tetraethoxysilan und Vinyltriethoxysilan als Verbindungen der Formel (I) und Methyltriethoxysilan als Verbindung der Formel (II), oder
- Tetraethoxysilan, Vinyltriethoxysilan und 2-Aminoethyl-3- aminopropyltriethoxysilan als Verbindungen der Formel (I) und Methyltriethoxysilan als Verbindung der Formel (II),
In einer weiteren Ausführungsform sind die Verbindung der allgemeinen Formel (I) in einer molaren Menge zwischen 0,05 - 0.2 mol, bevorzugt 0,06 - 0,15 mol, insbesondere bevorzugt 0,08-0,12 mol und die Verbindung der allgemeinen Formel (II) in einer molaren Menge zwischen 0,05 und 0,2 mol, bevorzugt zwischen 0,1 und 0,18 mol, besonders bevorzugt zwischen 0,12 und 0,16 mol in der Zusammensetzung enthalten.

Dabei kann sich der für die Verbindung der allgemeinen Verbindung (I) angegebene Bereich der molaren Menge sich auf eine Verbindung oder auf die Summe von zwei Verbindungen oder drei Verbindungen der allgemeinen Formel (I) beziehen.

So können in der Variante der Zusammensetzung aus Tetraethoxysilan und Vinyltriethoxysilan als Verbindungen der Formel (I) und Methyltriethoxysilan als Verbindung der Formel (II) 0,04 mol Tetraethoxysilan, 0,02 mol Vinyltriethoxysilan und 0,16 mol Methyltriethoxysilan enthalten sein.

In der anderen Variante der Zusammensetzung aus Tetraethoxysilan, Vinyltriethoxysilan und 2-Aminoethyl-3- aminopropyltriethoxysilan als Verbindungen der Formel (I) und Methyltriethoxysilan als Verbindungen der Formel (II) können 0,035 mol Tetraethoxysilan, 0,019mol Vinyltriethoxysilan und ...0.022-Aminoethyl-3- aminopropyltriethoxysilan und 0,16 mol Methyltriethoxysilan enthalten sein.

Das Verhältnis des Silanverbindungen der Formel (I) zu der Silanverbindung der Formel (II) liegt bevorzugt zwischen 1 : 0,5 und 2 : 1, insbesondere bevorzugt zwischen 1 : 0,75 und 1,5 : 1, ganz besonders bevorzugt zwischen 1 : 1 und 1.2 : 1.

Bevorzugt liegt das Additiv als wässrige Suspension vor. Es können aber auch Reste von organischen Lösemitteln, insbesondere Alkoholen (wie Ethanol), im Additiv enthalten sein. Der Lösemittelgehalt ist im Wesentlichen durch die Verwendung der Silane bedingt. Der Alkoholanteil kann z.B. bei < 1 % liegen.

In einer weiteren Ausführungsform kann das Additiv der vorliegenden Bindemittelzusammensetzung anorganische Partikel, insbesondere SiO₂-, Al₂O₃-, ZrO₂-, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden. In einer bevorzugten Variante werden nanoskalige SiO₂ Partikel als wässrig, basische Suspension zugegeben.

So kann das in der vorliegenden Bindemittelzusammensetzung verwendete Additiv folgende Kombinationen aufweisen:
- mindestens ein **SiX¹₄**, wobei der Rest X¹ Alkoxy, insbesondere Methoxy, Ethoxy, n-Propoxy oder i-Propoxy, ist, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und SiO₂-Partikel, oder
- mindestens ein **SiX¹₄**, wobei der Rest X¹ Alkoxy, insbesondere Methoxy, Ethoxy, n-Propoxy oder i-Propoxy, ist, mindestens ein **R¹SiX¹₃** mit R¹ mit C1-C8 Alkyl mit einer funktionellen Gruppe Q¹ ausgewählt aus Amino-, Aminoalkylamino-, Epoxid- und Alkenyl - Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und SiO₂-Partikel, oder
- mindestens ein **SiX¹₄**, wobei der Rest X¹ Alkoxy, insbesondere Methoxy, Ethoxy, n-Propoxy oder i-Propoxy, ist, und mindestens zwei (verschiedene) **R¹SiX¹₃** mit R¹ mit C1-C8 Alkyl mit einer funktionellen Gruppe Q¹ ausgewählt aus Amino-, Aminoalkylamino-, Epoxid- und Alkenyl -Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und SiO₂-Partikel.

In besonders bevorzugten Ausführungsformen enthält das Additiv:
- Tetraethoxysilan und Vinyltriethoxysilan als Verbindungen der Formel (I) und Methyltriethoxysilan als Verbindung der Formel (II), und SiO₂-Partikel, oder
- Tetraethoxysilan, Vinyltriethoxysilan und 2-Aminoethyl-3- aminopropyltriethoxysilan als Verbindungen der Formel (I) und Methyltriethoxysilan als Verbindung der Formel (II), und SiO₂-Partikel.

Zucker und Silan-Additiv werden gemischt, wobei die Menge an Zucker bezogen auf die Gesamtmenge an Bindemittelzusammensetzung zwischen 40 und 60 g, bevorzugt 45 bis 55 g, z.B. 50 g beträgt und die Menge an Silan-Additiv (als Suspension) bezogen auf die Gesamtmenge an Bindemittelzusammensetzung zwischen 30 und 50 g, bevorzugt 35 und 45 g, z.B. 40 g.

Das Masseverhältnis zwischen Zucker und Silan-Additiv beträgt zwischen 0,5 :1 und 1 : 1, bevorzugt 0,8 : 1.

So kann die vorliegende Bindemittelzusammensetzung folgende Kombinationen aufweisen:
- mindestens ein **SiX¹₄**, wobei der Rest X¹ Alkoxy, insbesondere Methoxy, Ethoxy, n-Propoxy oder i-Propoxy, ist, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und optional SiO₂-Partikel, und mindestens einen Zucker, oder
- mindestens ein **SiX¹₄**, wobei der Rest X¹ Alkoxy, insbesondere Methoxy, Ethoxy, n-Propoxy oder i-Propoxy, ist, mindestens ein **R¹SiX¹₃** mit R¹ mit C1-C8 Alkyl mit einer funktionellen Gruppe Q¹ ausgewählt aus Amino-, Aminoalkylamino-, Epoxid- und Alkenyl - Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und optional SiO₂-Partikel, und mindestens einen Zucker, oder
- mindestens ein **SiX¹₄**, wobei der Rest X¹ Alkoxy, insbesondere Methoxy, Ethoxy, n-Propoxy oder i-Propoxy, ist, und mindestens zwei (verschiedene) **R¹SiX¹₃** mit R¹ mit C1-C8 Alkyl mit einer funktionellen Gruppe Q¹ ausgewählt aus Amino-, Aminoalkylamino-, Epoxid- und Alkenyl -Gruppe und mit X¹ Alkoxy, insbesondere Methoxy, Ethoxy, n-Propoxy oder i-Propoxy, und mindestens ein **R²SiX²₃** mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, und optional SiO₂-Partikel und mindestens einen Zucker.

In besonders bevorzugten Ausführungsformen enthält das Additiv:
- Tetraethoxysilan und Vinyltriethoxysilan als Verbindungen der Formel (I) und Methyltriethoxysilan als Verbindung der Formel (II), und optional SiO₂-Partikel, und mindestens einen Zucker, oder
- Tetraethoxysilan, Vinyltriethoxysilan und 2-Aminoethyl-3- aminopropyltriethoxysilan als Verbindungen der Formel (I) und Methyltriethoxysilan als Verbindung der Formel (II), und optional SiO₂-Partikel und mindestens einen Zucker.

Wie bereits oben erwähnt, ist es auch möglich und unter bestimmten Bedingungen wünschenswert (z.B. wenn die Bindemittelzusammensetzung sehr dünnflüssig ist), der Bindemittelzusammensetzung mindestens ein Verdickungsmittel zuzugeben. Die Zugabe eines Verdickungsmittels ist vorteilhaft, um die Viskosität der Bindemittelzusammensetzung so einzustellen, dass ein Eindringen des Bindemittels in die Holzfasern bzw. Holzfaserplatte aufgrund einer zu hohen Dünnflüssigkeit bzw. zu niedriger Viskosität verhindert wird. Als Verdickungsmittel zur Viskositätseinstellung bieten sich natürliche Verdickungsmittel oder auch synthetische Verdickungsmittel an.

Als organische Verdickungsmittel können Stärke, Gelatine, Casein aber auch Mehle, wie zum Beispiel Weizenmehl, Roggenmehl, Guarkernmehl, Johannesbrotkernmehl verwendet werden. Bei der Verwendung von herkömmlichen Mehlen ist es auch möglich, biologisch verunreinigte Mehle zu verwenden, da aufgrund der späteren Verarbeitung der Holzwerkstoffe und der hohen Temperaturen während des Herstellungsprozesses der Holzwerkstoffplatten die biologische Verunreinigung, zum Beispiel in Form von schädigenden Mikroorganismen zerstört wird.

Als weitere Verdickungsmittel können abgewandelte Naturstoffe, wie zum Beispiel Hydroxyethylcellulose, Carboxymethylcellulose, Hydroxypropylmethylcellulose, Hydroxpropylcellulose oder Ethylhydroxyethylcellulose eingesetzt werden. Synthetische Verdickungsmittel, wie Polyvinylalkohole, Polyacrylsäure, Polymetacrylsäure, Polyacrylamide, Polyvinylpyrolidone und Polyethylenglycole sind auch einsetzbar.

Das Verdickungsmittel kann in einer Menge von 5 bis 30 Gew%, bevorzugt 10 bis 15 Gew%, in Abhängigkeit vom gewünschten Viskositätsgrad der Bindemittelzusammensetzung zugegeben werden.

Die vorliegend verwendete Bindemittelzusammensetzung kann in einem Verfahren umfassend die folgenden Schritte hergestellt werden:
- Bereitstellen von mindestens einer Verbindung, bevorzugt zwei Verbindungen der allgemeinen Formel (I) und mindestens einer Verbindung der allgemeinen Formel (II);
- Zugabe von mindestens einem Katalysator, insbesondere einer Säure, zu der Mischung aus mindestens einer Verbindung, bevorzugt zwei Verbindungen der Formel (I) und mindestens einer Verbindung der Formel (II);
- optional Zugabe von mindestens Dispersion von anorganischen Partikeln;
- Abtrennung der wässrigen Phase des Reaktionsgemisches aus mindestens einer Verbindung, bevorzugt zwei Verbindungen der Formel (I) und mindestens einer Verbindung der Formel (II),
- optional Zugabe von mindestens einer weiteren, dritten Verbindung der allgemeinen Formel (I),
- Zugabe von mindestens einem Zucker zu dem abgetrennten wässrigen Reaktionsgemisch aus mindestens einer Verbindung, bevorzugt zwei Verbindungen der Formel (I) und mindestens einer Verbindung der Formel (II).

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak zugegeben. Dies führt zu einer Separation der wässrigen Phase mit dem Binderanteil von der alkoholischen Phase (ethanolischen Phase). Die wässrige Phase kann anschließend leicht von der alkoholischen Phase abgetrennt werden.

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in Bezug auf die Gesamtmenge des Bindemittels verwendet.

Die anorganischen Partikel, insbesondere SiO₂-Partikel, werden als basische Suspension zugegeben. Dies dient gleichzeitig zu einer pH-Änderung des Reaktionsgemisches und Phasentrennung von alkoholischer Phase und wässriger Silan-Suspension. Der Zucker wird der wässrigen Silan-Suspension zugegeben.

Die Bindemittelzusammensetzung kann als wässrige Mischung auf die Holzpartikel aufgesprüht werden. Dies kann z.B. in einem Mischer, einem Coil oder einer Blow-line erfolgen.

Die vorliegende Bindemittelzusammensetzung wird in einer Menge zwischen 10 und 20 Gew%, bevorzugt zwischen 12 und 15 Gew% bezogen auf die Gesamtmenge an Holzpartikeln verwendet.

Nach dem Auftragen der Bindemittelzusammensetzung auf die Holzpartikel werden die beleimten Holzpartikel auf einem Transportband abgelegt oder aufgestreut und anschließend in einer Etagen- oder Contipresse zu einer Holzwerkstoffplatte verpresst.

Das Verpressen kann bei einer Presstemperatur zwischen 150 und 250°C, bevorzugt 180°C und 220°C, und einer Presszeit zwischen 30 und 240 sec, bevorzugt 100 und 210 sec, insbesondere 150 und 180sec erfolgen.

Die mit dem vorliegenden Verfahren hergestellten Holzwerkstoffplatten weisen somit eine Bindemittelzusammensetzung bestehend aus mindestens einem Zucker und einem Silan-Additiv (wie oben definiert) auf.

Die in dem vorliegenden Verfahren verwendeten Holzpartikel sind bevorzugt Holzspänen oder Holzstrands.

Mit dem vorliegenden Verfahren können demnach bevorzugt Holzwerkstoffplatten in Form einer Holzspanplatte oder einer OSB (oriented strand board) bereitgestellt werden.

Holzspanplatten bilden die Basis vieler Gegenstände des täglichen Lebens, beispielsweise von Möbeln oder Belägen für Wand, Boden oder Decke.

Für die Herstellung von Holzspanplatten werden zunächst Hackschnitzel aus geeigneten Hölzern hergestellt. Es ist auch möglich, Holzspäne aus Holz ohne den Umweg über Hackschnitzel herzustellen. Die Hackschnitzel bzw. das Holz können vor ihrer weiteren Verwendung von Fremdstoffen z.B. im Rahmen einer Trockenreinigung oder Nassreinigung gereinigt werden.

Es schließt sich ein Zerspanungsprozess der Holzhackschnitzel in einem Zerspaner an.

Die mit dem Zerspanungsprozess hergestellten Holzspäne weisen typischerweise eine Länge zwischen 1,5 mm und 20 mm und eine Dicke zwischen 0,05 mm und 1 mm auf.

In einem weiteren Schritt werden die Holzspäne nach dem Zerspanungsprozess mit dem vorliegenden Bindemittelsystem wie oben beschrieben beaufschlagt bzw. in Kontakt gebracht, wobei das In-Kontaktbringen der Holzspäne mit dem Bindemittel jeweils in unterschiedlicher Weise erfolgen kann.

Holzspäne werden bevorzugt in einer Mischvorrichtung, z.B. Trogmischer oder Trommelmischer (Coil), mit dem Bindemittel kontaktiert.

Nach Beleimen werden die Holzspäne auf ein Transportband mittels Wind- und/oder Wurfstreuung aufgebracht. Es folgt das Verpressen der auf dem Transportband angeordneten Holzspäne, unter den oben angeführten Pressbedingungen.

Grobspanplatten, auch OSB (oriented strand boards) genannt, sind Holzwerkstoffplatten, die aus langen Spänen (strands) hergestellt werden. Die ursprünglich als Abfallprodukte der Furnier- und Sperrholzindustrie anfallenden OSB werden jedoch zunehmend im Holz- und Fertighausbau eingesetzt, da OSB leicht sind und trotzdem die an Bauplatten gesetzten statischen Anforderungen erfüllen. So werden OSB als Bauplatten und als Wand- oder Dachbeplankung oder auch im Fußbodenbereich eingesetzt.

Die Herstellung der OSB erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert.

Die so hergestellten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

Im Anschluss an die Trocknung der Strands werden diese in eine Beleimvorrichtung (Coil) eingeführt, in welcher das vorliegende Bindemittelsystem auf die Späne aufgebracht wird.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB-Platten zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB verwendet werden.

Im Anschluss an die Streuung der Strands erfolgt ein kontinuierliches Verpressen der selbigen unter hohem Druck und hoher Temperatur von z.B. 200 bis 250°C.

Die unter Verwendung der vorliegenden Bindemittelzusammensetzung hergestellten Holzwerkstoffplatten, insbesondere Holzspanplatten, weisen eine Querzugsfestigkeit von größer 0,2 N/mm², bevorzugt von größer 0,25 N/mm², insbesondere bevorzugt größer 0,3 N/mm², noch bevorzugter größer 0,4 N/mm² auf. Die Querzugsfestigkeit kann in einem Bereich zwischen 0,2 und 0,9 N/mm², bevorzugt zwischen 0,3 und 0,8 N/mm², insbesondere bevorzugt zwischen 0,4 und 0,7 N/mm² liegen.

In einer Ausführungsform weist eine Holzspanplatte mit dem vorliegenden Bindemittelsystem in einer Menge von 12 Gew% bezogen auf die Menge Holzspäne eine Querzugsfestigkeit in einem Bereich zwischen 0,2 und 0,55 N/mm², bevorzugt zwischen 0,25 und 0,5 N/mm², insbesondere bevorzugt zwischen 0,3 und 0,5 N/mm² auf.

In einer weiteren Ausführungsform weist eine Holzspanplatte mit dem vorliegenden Bindemittelsystem in einer Menge von 15 Gew% bezogen auf die Menge Holzspäne eine Querzugsfestigkeit in einem Bereich zwischen 0,3 und 0,9 N/mm², bevorzugt zwischen 0,35 und 0,8 N/mm², insbesondere bevorzugt zwischen 0,35 und 0,7 N/mm² auf.

Die mit der vorliegenden Bindemittelzusammensetzung hergestellten Spanplatten entsprechen den Anforderungen gemäß EN 312.

Dabei besteht eine starke Abhängigkeit zwischen Presszeit und Querzugsfestigkeit: je länger die Presszeit desto höher die Querzugsfestigkeit.

Die Erfindung wird nachfolgend an mehreren Ausführungsbeispielen näher erläutert.

### Ausführungsbeispiel 1: Herstellung einer ersten Ausführungsform der Bindemittelzsuammensetzung (ino@sil Y50)

Vorlage von 28,33 g Methyltriethoxysilan, 8,077 g Tetraethoxysilan und 3,27 g Vinyltriethoxysilan. Es erfolgt eine gleichzeitige Zugabe von 0,32 g einer 37 % Schwefelsäure und 9,76 g demineralisiertem Wasser. Das Gemisch wird für 80 Minuten zur Hydrolyse und Kondensation gerührt. Das Gemisch erwärmt sich hierbei auf ca. 45 °C und wird nach der Reaktionszeit auf Raumtemperatur abgekühlt. Anschließend erfolgt eine Zugabe von 37,92 g einer basischen nanoskaligen SiO₂ Suspension (Levasil 300/30). Die Umstellung des pH-Wertes führt zu einer Phasentrennung, so dass nach ca. 60 Minuten Wartezeit, die alkoholische Phase über einen Scheidetrichter von der nun wässrigen Silan-Suspension getrennt werden kann.

Diese wässrige Suspension wird nun auf 50 °C erwärmt und der Kristallzucker (Basis Rübenzucker oder Rohrzucker) unter Rühren hinzugegeben. Im vorliegenden Beispiel "Y50" wurde auf 40 g Silan-Suspension 50 g Zucker gelöst. Hierbei wird die Temperatur auf 50 °C gehalten und noch weiter 120 Minuten gerührt.

### Ausführungsbeispiel 2: Herstellung einer ersten Ausführungsform der Bindemittelzusammensetzung (ino@sil Y50-HS)

Vorlage von 27,88 g Methyltriethoxysilan, 7,472 g Tetraethoxysilan und 2,89 g Vinyltriethoxysilan. Es erfolgt eine gleichzeitige Zugabe von 0,29 g einer 37 % Schwefelsäure und 9,32 g demineralisiertem Wasser. Das Gemisch wird für 80 Minuten zur Hydrolyse und Kondensation gerührt. Das Gemisch erwärmt sich hierbei auf ca. 45 °C und wird nach der Reaktionszeit auf Raumtemperatur abgekühlt. Anschließend erfolgt eine Zugabe von 36,39 g einer basischen nanoskaligen SiO₂ Suspension (Levasil 300/30). Die Umstellung des pH-Wertes führt zu einer Phasentrennung, so dass nach ca. 60 Minuten Wartezeit, die alkoholische Phase über einen Scheidetrichter von der nun wässrigen Silan-Suspension getrennt werden kann.

Nun wird auf 50 g dieser Suspension noch 3,75 g 2-Aminoethyl-3-aminopropyltriethoxysilan hinzugegeben und für 45 Minuten bei 30 °C gerührt. Das Amin-funktionalisierte Silan führt über die Amin-Gruppen zu weiteren Querverenetzungen, die gegenüber dem Aufbau der Si-O-Si Kondensation auch schon bei "geringeren" Temperaturen stark ausgeprägt sind.

Diese wässrige Suspension wird nun auf 50 °C erwärmt und der Kristallzucker (Basis Rübenzucker oder Rohrzucker) unter Rühren hinzugegeben. Im vorliegenden Beispiel "Y50-HS" wurde auf 40 g Silan-Suspension 50 g Zucker gelöst. Hierbei wird die Temperatur auf 50 °C gehalten und noch weiter 120 Minuten gerührt.

### Ausführungsbeispiel 3: Herstellung Holzwerkstoff

In einem Mischer werden 6 kg Mittelschichtspäne vorgelegt. Dazu werden 2,4 kg Zuckersilan-Leim Y 50-HS der Fa. Inomat (15 % bezogen auf Späne) über Düsen zu dosiert. Nachdem die Dosierung abgeschlossen war. Wurde noch ca. 14 min. weiter gemischt. Danach wurden zur Herstellung von 15 mm Spanplatten jeweils 900 g bzw. 1,04 kg beleimte Späne entnommen und in einen Rahmen (300 x 300 mm) gestreut. Dann wurde der Spankuchen in eine Presse überführt und mit den unten aufgeführten Pressparametern verpresst. Die Platten wurden anschliessend aus der Presse entnommen und nach dem Abkühlen wurden die Querzugfestigkeit und die Quellung bestimmt.

| Nr. | Leimtyp | Beleimung in % | Einwaage in kg | Rohdichte in kg | Pressprogramm | Querzug N/mm² |
|---|---|---|---|---|---|---|
| *1* | Y50-HS | 12 | 0,9 | 630 | 1.1,5N/mm², 30 sec | *0,29* |
| | | | | | 2.1,8N/mm², 210 sec | |
| *2* | Y50-HS | 12 | 0,9 | 640 | 1.1,5N/mm², 30 sec | *0,24* |
| | | | | | 2.1,8N/mm², 240 sec | |
| *3* | *Y50-HS* | *12* | 0,9 | 686 | 1.1,5N/mm², 30 sec | *0,38* |
| | | | | | 2.1,8N/mm², 270 sec | |
| *4* | *Y50-HS* | *12* | 0,9 | 674 | 1.1,5N/mm², 30 sec | *0,48* |
| | | | | | 2.1,8N/mm², 300 sec | |
| *5* | *Y50-HS* | *15* | 1,04 | 689 | 1.1,5N/mm², 30 sec | *0,35* |
| | | | | | 2.1,8N/mm², 240 sec | |
| *6* | *Y50-HS* | *15* | 1,04 | 735 | 1.1,5N/mm², 30 sec | *0,66* |
| | | | | | 2.1,8N/mm², 270 sec | |
| | *Y50-HS* | *15* | 1,04 | 735 | 1.1,5N/mm², 30 sec | *0,81* |
| | | | | | 2.1,8N/mm², 300 sec | |

Wie aus der Tabelle zu entnehmen ist, besteht eine starke Abhängigkeit zwischen der Presszeit und der Querzugfestigkeit. Die Werte für P2-Platten gemäss der DIN EN 312 werden von allen Platten mit einer Beleimung von 15 Gew% erreicht. Bei den Varianten mit einer Beleimung von 12 Gew% wird der Normwert bei Presszeiten oberhalb von 300 sec. erreicht.

## Patentansprüche

1. Bindemittelzusammensetzung für Holzwerkstoffplatten, insbesondere Holzspanplatten, als Einkomponentensystem bestehend aus / umfassend
a) Mindestens einem Zucker, oder einer Mischung davon; und
b) Mindestens einem Additiv aus
- mindestens einer Verbindung der allgemeinen Formel (I)
**R¹ₐSiX¹₍₄₋ₐ₎** **(I),**
wobei
- X¹ Alkoxy-, Aryloxy-, Acyloxy- ist, und
- R¹ ein organischer Rest ist ausgewählt aus der Gruppe umfassend Alkyl, Aryl, Cycloalkyl, die durch -O- oder -NH- unterbrochen sein können, und
- wobei R¹ mindestens eine funktionelle Gruppe Q¹ aufweist, die ausgewählt ist aus einer Gruppe enthaltend eine Acryl-, Acryloxy-, Amino-, Aminoalkylamino-, Methacryl-, Methacryloxy-, Cyano-, Isocyano-, Epoxid- und Alkenyl -Gruppe, und
- a = 0, 1, 2, 3, insbesondere 0 oder 1 ist,
- mindestens einer Verbindung der allgemeinen Formel (II)
**R²_{b}SiX²_{(4-b)}** **(II),**
wobei
- X² Alkoxy-, Aryloxy-, Acyloxy ist,
- R² ein nicht-hydrolysierbarer organischer Rest R² ist ausgewählt aus der Gruppe umfassend Alkyl und Aryl, und
- b = 1, 2, 3, oder 4, bevorzugt 1 oder 2, ist.

2. Bindemittelzusammensetzung nach Anspruch 1, **dadurch gekennzeichnet, dass** es frei ist von Formaldehyd, synthetischen Polyolen und/oder Kunststoffen.

3. Bindemittelzusammensetzung nach einem der vorhergehenden Ansprüche, **dadurch gekennzeichnet, dass** der mindestens eine Zucker ein Mono- oder Disaccharid, bevorzugt Saccharose ist.

4. Bindemittelzusammensetzung nach einem der vorhergehenden Ansprüche, **dadurch gekennzeichnet, dass** mindestens zwei, bevorzugt mindestens drei Silan-Verbindungen der allgemeinen Formel (I) und mindestens eine Verbindung der allgemeinen Formel (II) enthalten sind.

5. Bindemittelzusammensetzung nach einem der vorhergehenden Ansprüche, **dadurch gekennzeichnet, dass** X¹ und X² ausgewählt sind aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy.

6. Bindemittelzusammensetzung nach einem der vorhergehenden Ansprüche, **dadurch gekennzeichnet, dass** R¹ ausgewählt ist ausgewählt aus einer Gruppe umfassend C₁-C₃₀-Alkyl, insbesondere C₁-C₂₅-Alkyl, C₁-C₁₀-Alkyl, und C₃-C₈-Cycloalkyl.

7. Bindemittelzusammensetzung nach einem der vorhergehenden Ansprüche, **dadurch gekennzeichnet, dass** die mindestens eine funktionelle Gruppe Q¹ ausgewählt ist aus einer Gruppe enthaltend Amino-, Aminoalkylamino-, Cyano-, Isocyano-, Epoxid- und Alkenyl -Gruppe, bevorzugt Amino-, Aminoalkylamino-, Epoxid- und Alkenyl -Gruppe, insbesondere bevorzugt Amino-, Aminoalkylamino- und Alkenyl -Gruppe.

8. Bindemittelzusammensetzung nach einem der vorhergehenden Ansprüche, **dadurch gekennzeichnet, dass** mindestens eine Verbindung der allgemeinen Formel (I) der Formel **R¹SiX¹₃** mit R¹ mit C1-C10 Alkyl mit einer funktionellen Gruppe Q¹ ausgewählt aus Amino-, Aminoalkylamino-, Cyano-, Isocyano-, Epoxid- und Alkenyl -Gruppe und mit X¹ Alkoxy, insbesondere Methoxy, Ethoxy, n-Propoxy oder i-Propoxy entspricht.

9. Bindemittelzusammensetzung nach einem der vorhergehenden Ansprüche, **dadurch gekennzeichnet, dass** mindestens eine Verbindung der allgemeinen Formel (I) der Formel **SiX¹₄**, insbesondere mit X¹ Alkoxy, insbesondere Methoxy, Ethoxy, n-Propoxy oder i-Propoxy, entspricht.

10. Bindemittelzusammensetzung nach einem der vorhergehenden Ansprüche, **dadurch gekennzeichnet, dass** der nicht-hydroliserbare organische R² ausgewählt ist aus einer Gruppe umfassend C₁-C₁₅-Alkyl, insbesondere C₁-C₁₀-Alkyl, und C₆-C₁₀-Aryl, bevorzugt Methyl, Ethyl, n-Propyl, Isopropyl, n-Butyl, s-Butyl, t-Butyl, Pentyl, Hexyl, Heptyl, Octyl, Nonyl, Cyclohexyl, Phenyl und Naphthyl.

11. Bindemittelzusammensetzung nach einem der vorhergehenden Ansprüche, **dadurch gekennzeichnet, dass** mindestens eine Verbindung der Formel (II) der Formel **R²SiX²₃** mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy entspricht.

12. Bindemittelzusammensetzung nach einem der vorhergehenden Ansprüche, **dadurch gekennzeichnet, dass** anorganische Partikel, insbesondere SiO₂-, Al₂O₃-, ZrO₂-, TiO₂-Partikel, enthalten sein können.

13. Bindemittelzusammensetzung nach einem der vorhergehenden Ansprüche **gekennzeichnet durch** mindestens ein Verdickungsmittel.

14. Holzwerkstoffplatte umfassend mindestens ein Bindemittelsystem nach einem der vorhergehenden Ansprüche.

15. Holzwerkstoffplatte nach Anspruch 14, **dadurch gekennzeichnet, dass** es sich um eine Holzspanlatte mit einer Querzugsfestigkeit von größer 0,2 N/mm², bevorzugt von größer 0,25 N/mm², insbesondere bevorzugt größer 0,3 N/mm², noch bevorzugter größer 0,4 N/mm² (bestimmt gemäß DIN EN 312) handelt.

## Claims

1. Binder composition for wood-based panels, in particular chipboard, as a one-component system consisting of / comprising
a) at least one sugar, or a mixture thereof; and
b) at least one additive consisting of
- at least one compound of the general formula (I)
**R¹ₐSiX¹₍₄₋ₐ₎** **(I),**
wherein
- X¹ is alkoxy-, aryloxy-, acyloxy-, and
- R¹ is an organic moiety selected from the group comprising alkyl, aryl, cycloalkyl, which may be interrupted by -O- or -NH-, and
- wherein R¹ has at least one functional group Q¹ selected from a group comprising an acrylic, acryloxy, amino, aminoalkylamino, methacrylic, methacryloxy, cyano, isocyano, epoxy and alkenyl group, and
- a = 0, 1, 2, 3, in particular 0 or 1,
- at least one compound of the general formula (II)
**R²_{b}SiX²_{(4-b)}** **(II),**
wherein
- X² is alkoxy-, aryloxy-, acyloxy,
- R² is a non-hydrolyzable organic moiety R² selected from the group comprising alkyl and aryl, and
- b = 1, 2, 3, or 4, preferably 1 or 2.

2. Binder composition according to claim 1, **characterized in that** it is free of formaldehyde, synthetic polyols and/or plastics.

3. Binder composition according to one of the preceding claims, **characterized in that** the at least one sugar is a mono- or disaccharide, preferably sucrose.

4. Binder composition according to one of the preceding claims, **characterized in that** at least two, preferably at least three silane compounds of the general formula (I) and at least one compound of the general formula (II) are present.

5. Binder composition according to one of the preceding claims, **characterized in that** X¹ and X² are selected from a group comprising C₁₋₆-alkoxy, in particular methoxy, ethoxy, n-propoxy and butoxy, C₆₋₁₀-aryloxy, in particular phenoxy, C₂₋₇-acyloxy, in particular acetoxy or propionoxy.

6. Binder composition according to one of the preceding claims, **characterized in that** R¹ is selected from a group comprising C₁-C₃₀-alkyl, in particular C₁-C₂₅-alkyl, C₁-C₁₀-alkyl, and C₃-C₈-cycloalkyl.

7. Binder composition according to one of the preceding claims, **characterized in that** the at least one functional group Q¹ is selected from a group comprising amino, aminoalkylamino, cyano, isocyano, epoxide and alkenyl group, preferably amino, aminoalkylamino, epoxide and alkenyl group, more preferably amino, aminoalkylamino and alkenyl group.

8. Binder composition according to one of the preceding claims, **characterized in that** at least one compound of the general formula (I) corresponds to the formula **R¹SiX¹₃** with R¹ with C1-C10 alkyl with a functional group Q¹ selected from amino, aminoalkylamino, cyano, isocyano, epoxide and alkenyl group and with X¹ alkoxy, in particular methoxy, ethoxy, n-propoxy or i-propoxy.

9. Binder composition according to one of the preceding claims, **characterized in that** at least one compound of the general formula (I) corresponds to the formula **SiX¹₄**, in particular with X¹ alkoxy, in particular methoxy, ethoxy, n-propoxy or i-propoxy.

10. Binder composition according to one of the preceding claims, **characterized in that** the non-hydrolizable organic R² is selected from a group comprising C₁-C₁₅-alkyl, in particular C₁-C₁₀-alkyl, and C₆-C₁₀-aryl, preferably methyl, ethyl, n-propyl, isopropyl, n-butyl, s-butyl, t-butyl, pentyl, hexyl, heptyl, octyl, nonyl, cyclohexyl, phenyl and naphthyl.

11. Binder composition according to one of the preceding claims, **characterized in that** at least one compound of formula (II) corresponds to the formula **R²SiX²₃** with R² as C1-C10 alkyl group, preferably methyl, ethyl, propyl, pentyl, hexyl, heptyl, octyl, or as C6-C10 aryl group, preferably phenyl, and with X² as alkoxy, in particular methoxy, ethoxy, n-propoxy or i-propoxy.

12. Binder composition according to one of the preceding claims, **characterized in that** inorganic particles, in particular SiO₂ particles, Al₂O₃ particles, ZrO₂ particles, TiO₂ particles, may be present.

13. Binder composition according to one of the preceding claims, **characterized by** at least one thickening agent.

14. A wood-based panel comprising at least one binder system according to any one of the preceding claims.

15. Wood-based panel according to claim 14, **characterized in that** it is a wood particle board with a transverse tensile strength of greater than 0.2 N/mm², preferably greater than 0.25 N/mm², more preferably greater than 0.3 N/mm², even more preferably greater than 0.4 N/mm² (determined according to DIN EN 312).

## Revendications

1. Composition de liant pour panneaux en matériaux dérivés du bois, en particulier panneaux de particules, en tant que système monocomposant constitué de/comprenant
a) au moins un sucre, ou un mélange de ceux-ci ; et
b) au moins un additif en
- au moins un composé de la formule générale (I)
**R¹ₐSiX¹ ₍₄₋ₐ₎** **(I),**
dans laquelle :
- X¹ est alcoxy, aryloxy, acyloxy, et
- R¹ est un radical organique choisi parmi le groupe comprenant l'alkyle, l'aryle, le cycloalkyle, qui peuvent être interrompus par -O- ou -NH-, et
- dans laquelle R¹ présente au moins un groupe fonctionnel Q₁ qui est choisi parmi un groupe contenant un groupe acrylique, acryloxy, amino, aminoalkylamino, méthacrylique, méthacryloxy, cyano, isocyano, époxyde et alcényle, et
- a est = 0, 1, 2, 3, en particulier 0 ou 1,
- au moins un composé de la formule générale (II)
**R²_{b}SiX² _{(4-b)}** **(II),**
dans laquelle :
- X² est alcoxy, aryloxy, acyloxy,
- R² est un radical organique non hydrolysable R² choisi parmi le groupe comprenant alkyle et aryle, et
- b est = 1, 2, 3 ou 4, de manière préférée 1 ou 2.

2. Composition de liant selon la revendication 1, **caractérisée en ce qu'**elle est exempte de formaldéhyde, de polyols synthétiques et/ou de matières plastiques.

3. Composition de liant selon l'une quelconque des revendications précédentes, **caractérisée en ce que** l'au moins un sucre est un mono- ou un disaccharide, de manière préférée du saccharose.

4. Composition de liant selon l'une quelconque des revendications précédentes, **caractérisée en ce qu'**au moins deux, de manière préférée au moins trois composés silane de la formule générale (I) et au moins un composé de la formule générale (II) sont contenus.

5. Composition de liant selon l'une quelconque des revendications précédentes, **caractérisée en ce que** X¹ et X² sont choisis parmi un groupe contenant alcoxy en C₁₋₆, en particulier méthoxy, éthoxy, n-propoxy et butoxy, aryloxy en C₆₋₁₀, en particulier phénoxy, acyloxy en C₂₋₇, en particulier acétoxy ou propionoxy.

6. Composition de liant selon l'une quelconque des revendications précédentes, **caractérisée en ce que** R¹ est choisi parmi un groupe comprenant alkyle en C₁-C₃₀, en particulier alkyle en C₁-C₂₅, alkyle en C₁-C₁₀, et cycloalkyle en C₃-C₈.

7. Composition de liant selon l'une quelconque des revendications précédentes, **caractérisée en ce que** l'au moins un groupe fonctionnel Q¹ est choisi parmi un groupe contenant un groupe amino, aminoalkylamino, cyano, isocyano, époxyde et alcényle, de manière préférée amino, aminoalkylamino, époxyde et alcényle, de manière particulièrement préférée amino, aminoalkylamino et alcényle.

8. Composition de liant selon l'une quelconque des revendications précédentes, **caractérisée en ce qu'**au moins un composé de la formule générale (I) correspond à la formule **R¹SiX¹₃** avec R¹ avec un alkyle en C₁-C₁₀ avec un groupe fonctionnel Q¹ choisi parmi un groupe amino, aminoalkylamino, cyano, isocyano, époxyde et alcényle et avec X¹ comme alcoxy, en particulier méthoxy, éthoxy, n-propoxy ou i-propoxy.

9. Composition de liant selon l'une quelconque des revendications précédentes, **caractérisée en ce qu'**au moins un composé de la formule générale (I) correspond à la formule **SiX¹₄**, en particulier avec X¹ comme alcoxy, en particulier méthoxy, éthoxy, n-propoxy ou i-propoxy.

10. Composition de liant selon l'une quelconque des revendications précédentes, **caractérisée en ce que** le R² organique non hydrolysable est choisi parmi un groupe comprenant alkyle en C₁-C₁₅, en particulier alkyle en C₁-C₁₀, et aryle en C₆-C₁₀, de manière préférée méthyle, éthyle, n-propyle, isopropyle, n-butyle, s-butyle, t-butyle, pentyle, hexyle, heptyle, octyle, nonyle, cyclohexyle, phényle et naphthyle.

11. Composition de liant selon l'une quelconque des revendications précédentes, **caractérisée en ce qu'**au moins un composé de la formule (II) correspond à la formule **R²SiX²₃** avec R² comme groupe alkyle en C₁-C₁₀, de manière préférée méthyle, éthyle, propyle, pentyle, hexyle, heptyle, octyle, ou en tant que groupe aryle en C₆-C₁₀, de manière préférée phényle et avec X² comme alcoxy, en particulier méthoxy, éthoxy, n-propoxy ou i-propoxy.

12. Composition de liant selon l'une quelconque des revendications précédentes, **caractérisée en ce que** des particules inorganiques, en particulier des particules de SiO₂, Al₂O₃, ZrO₂, TiO₂, peuvent être contenues.

13. Composition de liant selon l'une quelconque des revendications précédentes **caractérisée par** au moins un épaississant.

14. Panneau en matériaux dérivés du bois comprenant au moins un système de liant selon l'une quelconque des revendications précédentes.

15. Panneau en matériaux dérivés du bois selon la revendication 14, **caractérisé en ce qu'**il s'agit d'un panneau de particules avec une résistance à la traction transversale supérieure à 0,2 N/mm², de manière préférée supérieure à 0,25 N/mm², en particulier de manière préférée supérieure à 0,3 N/mm², de manière davantage préférée supérieure à 0,4 N/mm² (déterminée selon la norme DIN EN 312).
